# EUROPEAN PATENT SPECIFICATION

(11) **EP 4 501 282 B1**
(45) Date of publication and mention of the grant of the patent: **01.07.2026**
(21) Application number: 23933801.5
(22) Date of filing: 08.11.2023
(51) Int. Cl.: A61C 17/02

(54) **INTELLIGENT SENSING DENTAL IRRIGATOR**
INTELLIGENTES SENSORISCHES ZAHNSPÜLGERÄT
IRRIGATEUR DENTAIRE À DÉTECTION INTELLIGENTE

(30) Priority: 17.04.2023 CN 202320861272 U
(43) Date of publication of application: 05.02.2025
(73) Proprietor: Bixdo (SH) Healthcare Technology Co., Ltd., Shanghai 201100 (CN); Guangdong Bixdo Health Technology Co., Ltd., Foshan, Guangdong 528311 (CN)
(72) Inventor: LUO, Junfu, Shanghai 201100 (CN); CHEN, Hao, Shanghai 201100 (CN); WANG, Jianan, Shanghai 201100 (CN); HE, Xiaowei, Shanghai 201100 (CN)
(74) Representative: Canzler & Bergmeier Patentanwälte Partnerschaft mbB
(86) International application number: PCT/CN2023/130487
(87) International publication number: WO 2024/216934

(56) References cited:
- WO-A1-2022/007837
- CN-U- 214 549 692
- CN-U- 214 679 065
- CN-U- 214 679 065
- CN-U- 216 876 670
- CN-U- 217 472 140
- CN-U- 217 472 140
- CN-U- 218 356 438
- CN-U- 219 538 542
- CN-U- 219 538 543
- KR-A- 20120 113 035
- US-A1- 2014 250 612

## Description

### FIELD OF THE INVENTION

The present disclosure relates to the technical field of oral cleaning, and in particular, to an intelligent sensing dental irrigator.

### BACKGROUND OF THE INVENTION

As living standards improve, people are increasingly prioritizing oral hygiene. Dental irrigators, which not only clean the tooth surface but also address gum pockets, have become essential hygiene products in many households.

Currently, intelligent dental irrigators aim to enhance user experience while maintaining portability. To achieve this, intelligent sensors are separated from the mainboard and positioned at the top of the irrigator. Simultaneously, the display screen is integrated into the mainboard. However, this design presents challenges: the connection between the intelligent sensors and the mainboard may not be secure enough, and during assembly, wire management may be problematic. Additionally, using non-standard sensors to avoid interference with the water outlet may lead to unreliable connections. Furthermore, opting for a high-cost ultra-thin display screen to address the issue of increased overall size due to screen integration adds complexity to assembly and raises costs.

CN 214 679 065 U discloses a wake-up enabled dental irrigator, which includes: a housing including a body barrel and a head cover disposed on top of the body barrel, with a portion of the head cover forming a light-transmitting display region; a machine-core frame arranged within the housing; and a wake-up system, comprising a wake-up controller, a display screen configured to indicate the current operating parameters of the dental irrigator, and a non-button-type wake-up sensor. The wake-up controller and the display screen are both arranged on the machine-core frame. The display screen on the inner side of the head cover is communicatively connected to the wake-up controller, and aligned with the light-transmitting display region. The wake-up sensor is communicatively connected to the wake-up controller. CN 217 472 140 U discloses a visualized smart electric toothbrush, which includes a brush head module, a handle module, and a locking module. The brush head module includes a brush head, a brush rod, a camera, and a brush rod base. One end of the brush rod accommodates the camera and the brush head, while the opposite end is configured to attach the brush rod base. The brush head includes an imaging channel to allow the camera to acquire oral information. However, the assembly of the above-described devices is complex, making rapid assembly and maintenance difficult.

### SUMMARY OF THE INVENTION

In view of the above-mentioned shortcomings, the present disclosure provides an intelligent sensing dental irrigator, which ensures a stable and smooth data line path between the sensor assembly and the machine-core assembly, enhancing communication reliability between the sensor assembly and the machine-core assembly.

The intelligent sensing dental irrigator comprises a body integration rack, a sensing cover assembly, a sensor assembly, a machine-core assembly, and a data transmission assembly. The body integration rack has a wiring constraint structure. The sensing cover assembly is disposed above the body integration rack. The sensor assembly is disposed on the sensing cover assembly. The machine-core assembly is disposed on the body integration rack. The data transmission assembly comprises a sensing data line. A laying path of the sensing data line passes through the wiring constraint structure, such that the sensing data line is constrained within the body integration rack. Two ends of the sensing data line are electrically connected to the sensor assembly and the machine-core assembly, respectively.

Preferably, the intelligent sensing dental irrigator further comprises a display screen, and the display screen is disposed on a side wall of the body integration rack. The data transmission assembly further comprises a display data line, and two ends of the display data line are electrically connected to the display screen and the machine-core assembly, respectively.

Preferably, the data transmission assembly further comprises display screen connectors, and the display screen connectors are disposed at an end portion of the display data line and/or a machine-core circuit board of the machine-core assembly, respectively, such that the display data line and the machine-core circuit board are configured to be plugged into each other.

The body integration rack comprises a rack body and may comprise a display screen constraining member, and the display screen constraining member is detachably connected to an outer side wall of the rack body. The display screen is clamped between the rack body and the display screen constraining member.

Preferably, the data transmission assembly further comprises sensor connectors, and the sensor connectors are disposed at an end portion of the sensing data line and/or a machine-core circuit board of the machine-core assembly, respectively, such that the sensing data line and the machine-core circuit board are configured to be plugged into each other.

The rack body has a hollow structure, an inner wall of the rack body is provided with a wiring slot, and the wiring slot serves as the wiring constraint structure.

Preferably, the sensing cover assembly comprises a cover, the cover is provided with a groove with a downward opening, and the sensor assembly is disposed within the groove.

Preferably, the body integration rack is made of transparent materials.

Preferably, the machine-core assembly comprises a machine-core rack and a machine-core circuit board, the machine-core circuit board is disposed on the machine-core rack and is electrically connected to the sensing data line, and the machine-core rack has an auxiliary wiring slot for constraining the sensing data line.

The intelligent sensing dental irrigator further comprises a body housing for accommodating the body integration rack, and the sensing cover assembly may serve as part of a top structure of the body housing.

As described above, the intelligent sensing dental irrigator of the present disclosure offers several benefits. It features a layout where the sensor assembly and the machine-core assembly are separated. The sensing cover assembly is disposed above the body integration rack, and the sensor assembly is disposed on the sensing cover assembly, allowing the sensor assembly to collect, by the sensing cover assembly, facial information from the user. The machine-core assembly is disposed on the body integration rack, and the two ends of the sensing data line are electrically connected to the sensor assembly and the machine-core assembly, respectively, allowing the facial information collected by the sensor assembly to be transmitted to the machine-core assembly by the sensing data line. To address issues with unreliable connections and messy wiring of the sensing data line, the body integration rack has a wiring constraint structure, and the laying path of the sensing data line passes through the wiring constraint structure to constrain the sensing data line within the body integration rack. As a result, the laying path from the sensor assembly to the machine-core assembly is smoother, minimizing the risk of entanglement during assembly. Additionally, the sensing data line is more securely attached to the body integration rack, enhancing communication reliability between the sensor assembly and the machine-core assembly. Overall, the intelligent sensing dental irrigator of the present disclosure enhances communication reliability between the sensor assembly and the machine-core assembly by providing a more robust and streamlined laying path for the sensing data line.

### BRIEF DESCRIPTION OF DRAWINGS

FIG. 1 shows an exploded view of an intelligent sensing dental irrigator according to the present disclosure;
FIG. 2 shows a position relationship diagram of a sensing cover assembly, a machine-core assembly, and a display screen during assembly;
FIG. 3 shows a cross-sectional view of the sensing cover assembly, a sensor assembly, and the display screen during assembly;
FIG. 4 shows a perspective view of a body integration rack;
FIG. 5 shows a perspective view of the sensing cover assembly;
FIG. 6 shows a perspective view of the sensor assembly, a sensing data line, and a sensor connector.

### Reference Numerals

- 1: Body integration rack
- 11: Rack body
- 12: Display screen constraining member
- 13: Wiring slot
- 2: Sensing cover assembly
- 21: Cover
- 22: Groove
- 3: Sensor assembly
- 4: Machine-core assembly
- 41: Machine-core circuit board
- 42: Machine-core rack
- 421: Auxiliary wiring slot
- 5: Data transmission assembly
- 51: Sensing data line
- 52: Display data line
- 53: Display screen connector
- 54: Sensor connector
- 6: Display screen

### DETAILED DESCRIPTION OF THE INVENTION

The embodiments of the present disclosure will be described below. Those skilled can easily understand disclosure advantages and effects of the present disclosure according to contents disclosed by the specification.

It should be noted that the structure, ratio, size, etc. shown in the accompanying drawings in this specification are only used to illustrate the content disclosed in the specification for the understanding and reading of those familiar with this technology, and are not intended to limit the implementation of the present invention. Any structural modification, proportional relationship change or size adjustment should still fall within the scope of the present disclosure, given that no effect and objective achievable by the present disclosure are hindered. Terms such as "upper", "lower", "left", "right", "middle", and "a" used in this specification are only for ease of description, and they are not intended to limit the scope of implementation of the present invention. Any change or adjustment of corresponding relative relationships without any substantial technical change should be regarded as within the scope of the implementation of the present disclosure.

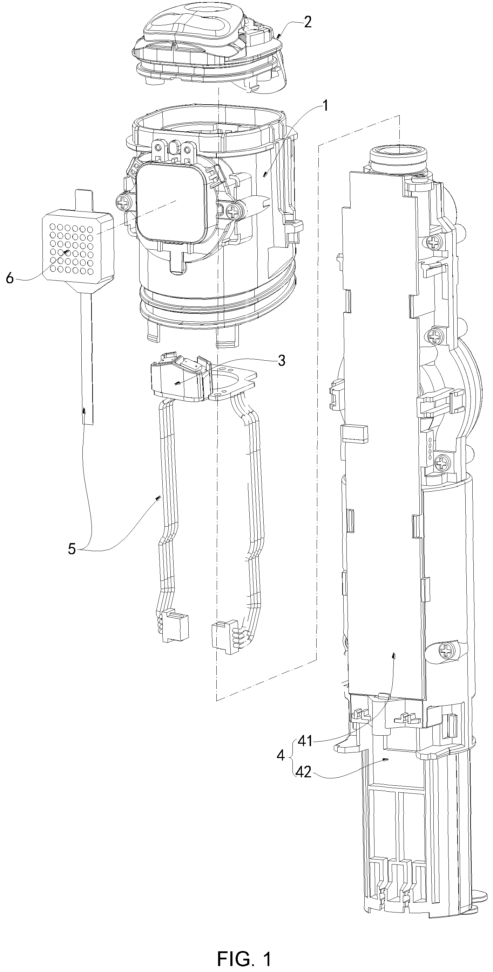

The present disclosure provides an intelligent sensing dental irrigator. Referring to FIG. 1, the intelligent sensing dental irrigator comprises a body housing (not shown) and a body integration rack 1 disposed in an inner cavity of the body housing. The body housing is mainly used for accommodating the body integration rack 1 and other components. The body integration rack 1 is used for installing multiple components, such as sensing cover assembly 2 and machine-core assembly 4. Typically, in order to more closely gather facial information when users use the intelligent sensing dental irrigator, the sensing cover assembly 2 is disposed at a top of the body housing, and may serve as part of a top structure of the body housing.

As shown in FIGs 1-6, the intelligent sensing dental irrigator comprises the body integration rack 1, the sensing cover assembly 2, a sensor assembly 3, the machine-core assembly 4, and a data transmission assembly 5.

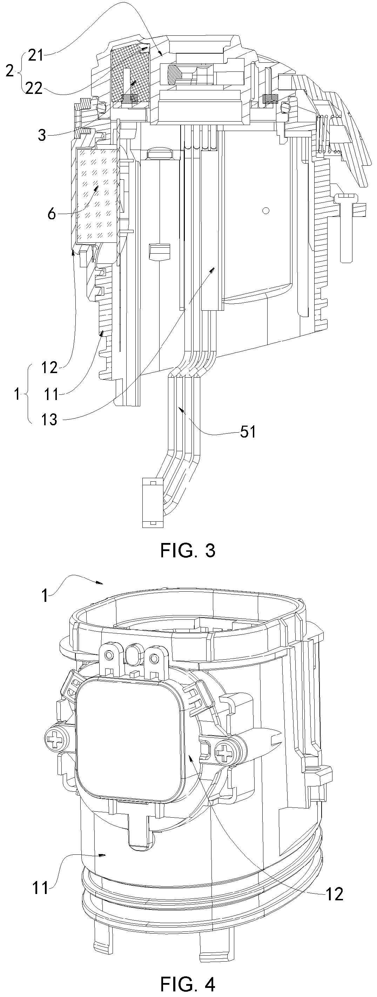

The body integration rack 1 (see FIG. 4 for details) has a wiring constraint structure.

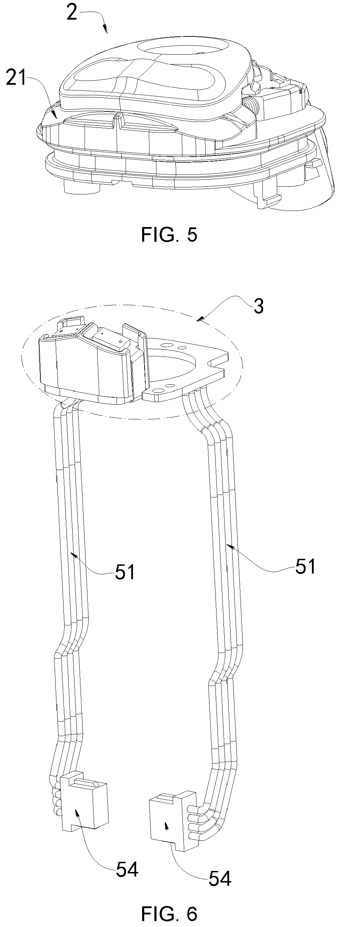

The sensing cover assembly 2 (see FIG. 5 for details) is disposed above the body integration rack 1.

The sensor assembly 3 (see FIG. 6 for details) is disposed on the sensing cover assembly 2.

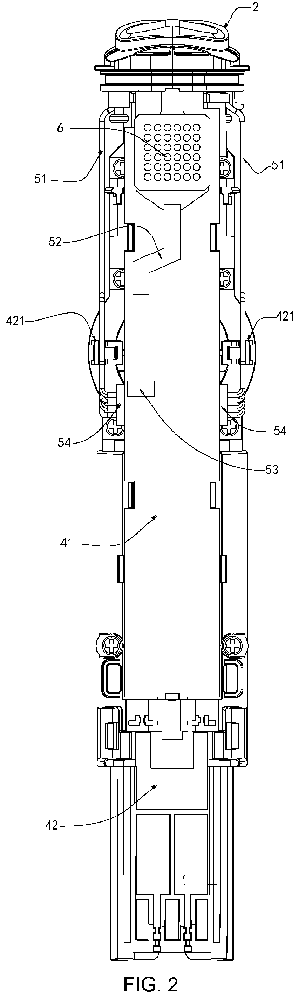

The machine-core assembly 4 (see FIG. 2 for details) is disposed on the body integration rack 1.

The data transmission assembly 5 comprises a sensing data line 51. A laying path of the sensing data line 51 passes through the wiring constraint structure, such that the sensing data line 51 is constrained within the body integration rack 1. Two ends of the sensing data line 51 are electrically connected to the sensor assembly 3 and the machine-core assembly 4 respectively.

In the present disclosure, the intelligent sensing dental irrigator features a layout where the sensor assembly 3 and the machine-core assembly 4 are separated. The sensing cover assembly 2 is disposed above the body integration rack 1, and the sensor assembly 3 is disposed on the sensing cover assembly 2, allowing the sensor assembly 3 to collect, by the sensing cover assembly 2, the facial information from the user. The machine-core assembly 4 is disposed on the body integration rack 1, and the two ends of the sensing data line 51 (which may be a wiring harness, for example, a flat cable) are electrically connected to the sensor assembly 3 and the machine-core assembly 4, respectively, allowing the facial information collected by the sensor assembly 3 to be transmitted to the machine-core assembly 4 by the sensing data line 51. To address issues with unreliable connections and messy wiring of the sensing data line 51, the body integration rack 1 has the wiring constraint structure, and the laying path of the sensing data line 51 passes through the wiring constraint structure to constrain the sensing data line 51 within the body integration rack 1. As a result, the laying path from the sensor assembly 3 to the machine-core assembly 4 is smoother, minimizing the risk of entanglement during assembly. Additionally, the sensing data line 51 is more securely attached to the body integration rack 1, enhancing communication reliability between the sensor assembly 3 and the machine-core assembly 4.

Overall, the intelligent sensing dental irrigator of the present disclosure enhances communication reliability between the sensor assembly 3 and the machine-core assembly 4 by providing a more robust and streamlined laying path for the sensing data line 51.

To address the issue of increased overall size and decreased water tank capacity due to the integrated display screen on the mainboard, the intelligent sensing dental irrigator further comprises a display screen 6 disposed on a side wall of the body integration rack 1. The data transmission assembly 5 further comprises a display data line 52 (which may also be a wiring harness, for example, a flat cable), and two ends of the display data line 52 are electrically connected to the display screen 6 and the machine-core assembly 4, respectively. In this way, the display screen 6 can be farther away from the water tank of the intelligent sensing dental irrigator, avoiding any impact on the water tank's capacity and reducing the assembly complexity for display screen 6. The display screen 6 can be fixed to the side wall of the body integration rack 1 through buckles. Further, the side wall of the body integration rack 1 can be configured with a concave-convex structure, and the display screen 6 is embedded into the side wall of the body integration rack 1, eliminating the need for high-cost ultra-thin display screens, allowing the use of standard display screens and reducing costs.

To facilitate the connection between the machine-core assembly 4 and the display screen 6, as shown in FIG.s 1 and 2, the data transmission assembly 5 further comprises display screen connectors 53. The display screen connectors 53 are disposed at an end portion of the display data line 52 and/or a machine-core circuit board 41 of the machine-core assembly 4, respectively, such that the display data line 52 and the machine-core circuit board 41 are configured to be plugged into each other. Further, the display screen connectors 53 may consist of complementary male and female plugs. One of these plugs is disposed at the end portion of the display data line 52, while the other is disposed at the machine-core circuit board 41 of the machine-core assembly 4.

To facilitate the installation of the display screen 6, as shown in FIG. 4, the body integration rack 1 comprises a rack body 11 and a display screen constraining member 12. The display screen constraining member 12 is detachably connected to an outer side wall of the rack body 11. The display screen 6 is clamped between the rack body 11 and the display screen constraining member 12. Further, the display screen constraining member 12 is a transparent cover, and may be detachably installed on the outer side wall of the rack body 11 through screws and/or positioning posts.

To facilitate the connection between the machine-core assembly 4 and the sensor assembly 3, as shown in FIG.s 1 and 2, the data transmission assembly 5 further comprises sensor connectors 54. The sensor connectors 54 are disposed at an end portion of the sensing data line 51 and/or a machine-core circuit board 41 of the machine-core assembly 4, respectively, such that the sensing data line 51 and the machine-core circuit board 41 are configured to be plugged into each other. Further, the sensor connectors 54 may consist of complementary male and female plugs. One of these plugs is disposed at the end portion of the sensing data line 51, while the other is disposed at the machine-core circuit board 41 of the machine-core assembly 4.

To facilitate the wiring of the sensing data line 51 inside the body integration rack 1, as shown in FIG. 3, the body integration rack 1 comprises a rack body 11 having a hollow structure, an inner wall of the rack body 11 is provided with a wiring slot 13, and the wiring slot 13 serves as the wiring constraint structure. Further, a top of the machine-core assembly 4 extends into and is fixedly connected to the rack body 11, improving structural compactness.

To facilitate easier collection of facial information from users, as shown in FIG. 3, the sensing cover assembly 2 comprises a cover 21, the cover 21 is provided with a groove 22 with a downward opening, and the sensor assembly 3 is disposed within the groove 22. Further, the sensor assembly 3 may be fixedly amounted onto the cover 21 through slot positioning posts and/or screws.

To allow users to observe the internal structure of the body integration rack 1, such as paths of the sensing data line 51, the body integration rack 1 is made of transparent materials.

To enhance the wiring stability of the sensing data line 51, as shown in FIG. 2, the machine-core assembly 4 comprises a machine-core rack 42 and a machine-core circuit board 41, the machine-core circuit board 41 is disposed on the machine-core rack 42 and is electrically connected to the sensing data line 51, and the machine-core rack 42 has an auxiliary wiring slot 421 for constraining the sensing data line 51.

In summary, the intelligent sensing dental irrigator of the present disclosure enhances communication reliability between the sensor assembly and the machine-core assembly by providing a more robust and streamlined laying path for the sensing data line. Therefore, the present disclosure effectively overcomes various shortcomings of the prior art**.**

The present invention is defined by claim 1. Preferred embodiments are set forth in the appended dependent claims.

## Claims

1. An intelligent sensing dental irrigator, comprising a sensing cover assembly (2), a machine-core assembly (4), a data transmission assembly (5), and a body housing, **characterized in that** the intelligent sensing dental irrigator further comprises a body integration rack (1) having a wiring constraint structure;
wherein the sensing cover assembly (2) is disposed above the body integration rack (1), and a sensor assembly (3) is disposed on the sensing cover assembly (2);
wherein the machine-core assembly (4) is disposed on the body integration rack (1);
wherein the data transmission assembly (5) comprises a sensing data line (51), wherein a laying path of the sensing data line (51) passes through the wiring constraint structure, such that the sensing data line (51) is constrained within the body integration rack (1), wherein two ends of the sensing data line (51) are electrically connected to the sensor assembly (3) and the machine-core assembly (4), respectively;
wherein the body integration rack (1) is disposed in an inner cavity of the body housing, and the sensing cover assembly (2) is disposed at a top of the body housing;
wherein the body integration rack (1) comprises a rack body (11) having a hollow structure, the machine-core assembly (4) is inserted into the hollow structure of the rack body (11), and an upper end of the machine-core assembly (4) is fixedly connected to the rack body (11);
wherein an inner wall of the rack body (11) is provided with a wiring slot (13), and the wiring slot (13) serves as the wiring constraint structure.

2. The intelligent sensing dental irrigator according to claim 1, wherein the intelligent sensing dental irrigator further comprises a display screen (6), and the display screen (6) is disposed on a side wall of the body integration rack (1); wherein the data transmission assembly (5) further comprises a display data line (52), and two ends of the display data line (52) are electrically connected to the display screen (6) and the machine-core assembly (4), respectively.

3. The intelligent sensing dental irrigator according to claim 2, wherein the data transmission assembly (5) further comprises display screen connectors (53), and the display screen connectors (53) are disposed at an end portion of the display data line (52) and/or a machine-core circuit board (41) of the machine-core assembly (4), respectively, such that the display data line (52) and the machine-core circuit board (41) are configured to be plugged into each other.

4. The intelligent sensing dental irrigator according to claim 2, wherein the body integration rack (1) comprises a display screen constraining member (12), and the display screen constraining member (12) is detachably connected to an outer side wall of the rack body (11); wherein the display screen (6) is clamped between the rack body (11) and the display screen constraining member (12).

5. The intelligent sensing dental irrigator according to claim 1, wherein the data transmission assembly (5) further comprises sensor connectors (54), and the sensor connectors (54) are disposed at an end portion of the sensing data line (51) and/or a machine-core circuit board (41) of the machine-core assembly (4), respectively, such that the sensing data line (51) and the machine-core circuit board (41) are configured to be plugged into each other.

6. The intelligent sensing dental irrigator according to claim 1, wherein the sensing cover assembly (2) comprises a cover (21), the cover (21) is provided with a groove (22) with a downward opening, and the sensor assembly (3) is disposed within the groove (22).

7. The intelligent sensing dental irrigator according to claim 1, wherein the body integration rack (1) is made of transparent materials.

8. The intelligent sensing dental irrigator according to claim 1, wherein the machine-core assembly (4) comprises a machine-core rack (42) and a machine-core circuit board (41), the machine-core circuit board (41) is disposed on the machine-core rack (42) and is electrically connected to the sensing data line (51), and the machine-core rack (42) has an auxiliary wiring slot (421) for constraining the sensing data line (51).

9. The intelligent sensing dental irrigator according to claim 1, wherein the sensing cover assembly (2) serves as part of a top structure of the body housing.

## Patentansprüche

1. Intelligentes sensorisches Zahnspülgerät, das eine sensorische Abdeckungsbaugruppe (2), eine Maschinenkernbaugruppe (4), eine Datenübertragungsbaugruppe (5) und ein Körpergehäuse umfasst, **dadurch gekennzeichnet, dass** das intelligente sensorische Zahnspülgerät ferner ein Körperintegrationsgestell (1) mit einer Verkabelungsbeschränkungsstruktur umfasst;
wobei die sensorische Abdeckungsbaugruppe (2) über dem Körperintegrationsgestell (1) angeordnet ist und eine Sensorbaugruppe (3) auf der sensorischen Abdeckungsbaugruppe (2) angeordnet ist;
wobei die Maschinenkernbaugruppe (4) auf dem Körperintegrationsgestell (1) angeordnet ist;
wobei die Datenübertragungsbaugruppe (5) eine sensorische Datenleitung (51) umfasst, wobei ein Verlegepfad der sensorischen Datenleitung (51) durch die Verkabelungsbeschränkungsstruktur verläuft, so dass die sensorische Datenleitung (51) innerhalb des Körperintegrationsgestells (1) beschränkt ist, wobei zwei Enden der sensorischen Datenleitung (51) elektrisch mit der Sensorbaugruppe (3) bzw. der Maschinenkernbaugruppe (4) verbunden sind;
wobei das Körperintegrationsgestell (1) in einem inneren Hohlraum des Körpergehäuses angeordnet ist und die sensorische Abdeckungsbaugruppe (2) an einer Oberseite des Körpergehäuses angeordnet ist;
wobei das Körperintegrationsgestell (1) einen Gestellkörper (11) mit einer Hohlstruktur umfasst, die Maschinenkernbaugruppe (4) in die Hohlstruktur des Gestellkörpers (11) eingesetzt ist und ein oberes Ende der Maschinenkernbaugruppe (4) fest mit dem Gestellkörper (11) verbunden ist;
wobei eine innere Wand des Gestellkörpers (11) mit einem Verkabelungsschlitz (13) versehen ist und der Verkabelungsschlitz (13) als die Verkabelungsbeschränkungsstruktur dient.

2. Intelligentes sensorisches Zahnspülgerät nach Anspruch 1, wobei das intelligente sensorische Zahnspülgerät ferner einen Anzeigebildschirm (6) umfasst und der Anzeigebildschirm (6) an einer seitlichen Wand des Körperintegrationsgestells (1) angeordnet ist; wobei die Datenübertragungsbaugruppe (5) ferner eine Anzeigedatenleitung (52) umfasst und zwei Enden der Anzeigedatenleitung (52) elektrisch mit dem Anzeigebildschirm (6) bzw. der Maschinenkernbaugruppe (4) verbunden sind.

3. Intelligentes sensorisches Zahnspülgerät nach Anspruch 2, wobei die Datenübertragungsbaugruppe (5) ferner Anzeigebildschirmverbinder (53) umfasst und die Anzeigebildschirmverbinder (53) an einem Endabschnitt der Anzeigedatenleitung (52) bzw. einer Maschinenkernleiterplatte (41) der Maschinenkernbaugruppe (4) angeordnet sind, so dass die Anzeigedatenleitung (52) und die Maschinenkernleiterplatte (41) konfiguriert sind, um ineinander gesteckt zu werden.

4. Intelligentes sensorisches Zahnspülgerät nach Anspruch 2, wobei das Körperintegrationsgestell (1) ein Anzeigebildschirmbeschränkungselement (12) umfasst und das Anzeigebildschirmbeschränkungselement (12) lösbar mit einer äußeren seitlichen Wand des Gestellkörpers (11) verbunden ist; wobei der Anzeigebildschirm (6) zwischen dem Gestellkörper (11) und dem Anzeigebildschirmbeschränkungselement (12) eingeklemmt ist.

5. Intelligentes sensorisches Zahnspülgerät nach Anspruch 1, wobei die Datenübertragungsbaugruppe (5) ferner Sensorverbinder (54) umfasst und die Sensorverbinder (54) an einem Endabschnitt der sensorischen Datenleitung (51) bzw. einer Maschinenkernleiterplatte (41) der Maschinenkernbaugruppe (4) angeordnet sind, so dass die sensorische Datenleitung (51) und die Maschinenkernleiterplatte (41) konfiguriert sind, um ineinander gesteckt zu werden.

6. Intelligentes sensorisches Zahnspülgerät nach Anspruch 1, wobei die sensorische Abdeckungsbaugruppe (2) eine Abdeckung (21) umfasst, die Abdeckung (21) mit einer Nut (22) mit einer nach unten gerichteten Öffnung versehen ist und die Sensorbaugruppe (3) innerhalb der Nut (22) angeordnet ist.

7. Intelligentes sensorisches Zahnspülgerät nach Anspruch 1, wobei das Körperintegrationsgestell (1) aus transparenten Materialien hergestellt ist.

8. Intelligentes sensorisches Zahnspülgerät nach Anspruch 1, wobei die Maschinenkernbaugruppe (4) ein Maschinenkerngestell (42) und eine Maschinenkernleiterplatte (41) umfasst, die Maschinenkernleiterplatte (41) auf dem Maschinenkerngestell (42) angeordnet ist und elektrisch mit der sensorischen Datenleitung (51) verbunden ist und das Maschinenkerngestell (42) einen zusätzlichen Verkabelungsschlitz (421) zum Beschränken der sensorischen Datenleitung (51) aufweist.

9. Intelligentes sensorisches Zahnspülgerät nach Anspruch 1, wobei die sensorische Abdeckungsbaugruppe (2) als Teil einer oberen Struktur des Körpergehäuses dient.

## Revendications

1. Irrigateur dentaire à détection intelligente, comprenant un ensemble de couvercle de détection (2), un ensemble de noyau de machine (4), un ensemble de transmission de données (5), et un boîtier de corps, **caractérisé en ce que** l'irrigateur dentaire à détection intelligente comprend en outre un bâti d'intégration de corps (1) ayant une structure de contrainte de câblage ;
dans lequel l'ensemble de couvercle de détection (2) est disposé au-dessus du bâti d'intégration de corps (1), et un ensemble de capteur (3) est disposé sur l'ensemble de couvercle de détection (2) ;
dans lequel l'ensemble de noyau de machine (4) est disposé sur le bâti d'intégration de corps (1) ;
dans lequel l'ensemble de transmission de données (5) comprend une ligne de données de détection (51), dans lequel un trajet de pose de la ligne de données de détection (51) passe à travers la structure de contrainte de câblage, de sorte que la ligne de données de détection (51) est contrainte à l'intérieur du bâti d'intégration de corps (1), dans lequel deux extrémités de la ligne de données de détection (51) sont connectées électriquement à l'ensemble de capteur (3) et à l'ensemble de noyau de machine (4), respectivement ;
dans lequel le bâti d'intégration de corps (1) est disposé dans une cavité interne du boîtier de corps, et l'ensemble de couvercle de détection (2) est disposé au niveau d'une partie supérieure du boîtier de corps ;
dans lequel le bâti d'intégration de corps (1) comprend un corps de bâti (11) ayant une structure creuse, l'ensemble de noyau de machine (4) est inséré dans la structure creuse du corps de bâti (11), et une extrémité supérieure de l'ensemble de noyau de machine (4) est connectée de manière fixe au corps de bâti (11) ;
dans lequel une paroi interne du corps de bâti (11) est prévue avec une fente de câblage (13), et la fente de câblage (13) sert de structure de contrainte de câblage.

2. Irrigateur dentaire à détection intelligente selon la revendication 1, dans lequel l'irrigateur dentaire à détection intelligente comprend en outre un écran d'affichage (6), et l'écran d'affichage (6) est disposé sur une paroi latérale du bâti d'intégration de corps (1) ; dans lequel l'ensemble de transmission de données (5) comprend en outre une ligne de données d'affichage (52), et deux extrémités de la ligne de données d'affichage (52) sont connectées électriquement à l'écran d'affichage (6) et à l'ensemble de noyau de machine (4), respectivement.

3. Irrigateur dentaire à détection intelligente selon la revendication 2, dans lequel l'ensemble de transmission de données (5) comprend en outre des connecteurs d'écran d'affichage (53), et les connecteurs d'écran d'affichage (53) sont disposés au niveau d'une partie d'extrémité de la ligne de données d'affichage (52) et/ou d'une carte de circuit de noyau de machine (41) de l'ensemble de noyau de machine (4), respectivement, de sorte que la ligne de données d'affichage (52) et la carte de circuit de noyau de machine (41) sont configurées pour être enfichées l'une dans l'autre.

4. Irrigateur dentaire à détection intelligente selon la revendication 2, dans lequel le bâti d'intégration de corps (1) comprend un élément de contrainte d'écran d'affichage (12), et l'élément de contrainte d'écran d'affichage (12) est connecté de manière détachable à une paroi latérale externe du corps de bâti (11) ; dans lequel l'écran d'affichage (6) est serré entre le corps de bâti (11) et l'élément de contrainte d'écran d'affichage (12).

5. Irrigateur dentaire à détection intelligente selon la revendication 1, dans lequel l'ensemble de transmission de données (5) comprend en outre des connecteurs de capteur (54), et les connecteurs de capteur (54) sont disposés au niveau d'une partie d'extrémité de la ligne de données de détection (51) et/ou d'une carte de circuit de noyau de machine (41) de l'ensemble de noyau de machine (4), respectivement, de sorte que la ligne de données de détection (51) et la carte de circuit de noyau de machine (41) sont configurées pour être enfichées l'une dans l'autre.

6. Irrigateur dentaire à détection intelligente selon la revendication 1, dans lequel l'ensemble de couvercle de détection (2) comprend un couvercle (21), le couvercle (21) est prévu avec une rainure (22) avec une ouverture vers le bas, et l'ensemble de capteur (3) est disposé à l'intérieur de la rainure (22).

7. Irrigateur dentaire à détection intelligente selon la revendication 1, dans lequel le bâti d'intégration de corps (1) est constitué de matériaux transparents.

8. Irrigateur dentaire à détection intelligente selon la revendication 1, dans lequel l'ensemble de noyau de machine (4) comprend un bâti de noyau de machine (42) et une carte de circuit de noyau de machine (41), la carte de circuit de noyau de machine (41) est disposée sur le bâti de noyau de machine (42) et est connectée électriquement à la ligne de données de détection (51), et le bâti de noyau de machine (42) a une fente de câblage auxiliaire (421) pour contraindre la ligne de données de détection (51).

9. Irrigateur dentaire à détection intelligente selon la revendication 1, dans lequel l'ensemble de couvercle de détection (2) sert de partie d'une structure supérieure du boîtier de corps.
